# FASCICULE DE BREVET EUROPEEN

(11) **EP 2 841 774 B1**
(45) Date de publication et mention de la délivrance du brevet: **31.01.2018**
(21) Numéro de dépôt: 13720881.5
(22) Date de dépôt: 26.04.2013
(51) Int. Cl.: F16B 5/02, F16B 33/00, F16B 35/04, F16B 25/00

(54) **ORGANE DE FIXATION D'UN ACCESSOIRE SUR UN SUPPORT AINSI QUE DU SUPPORT SUR UNE STRUCTURE**
ELEMENT ZUR BEFESTIGUNG EINES ZUBEHÖRTEILS AN EINER HALTERUNG UND DER HALTERUNG AN EINER STRUKTUR
MEMBER FOR ATTACHING AN ACCESSORY ONTO A MOUNTING AND THE MOUNTING ONTO A STRUCTURE

(30) Priorité: 27.04.2012 FR 1253950
(43) Date de publication de la demande: 04.03.2015
(73) Titulaire: Bacacier 3 S, 63800 Cournon-d'Auvergne (FR); Ateliers LR Etanco, 78230 Le Pecq (FR)
(72) Inventeur: FAISANDIER, Julien, F-63110 Beaumont (FR); TOLLERET, Philippe, F-95550 Bessancourt (FR)
(74) Mandataire: Lavoix
(86) Numéro de dépôt international: PCT/EP2013/058769
(87) Numéro de publication internationale: WO 2013/160459

(56) Documents cités:
- EP-A1- 2 341 221
- DE-U1-202011 004 144
- FR-A1- 2 929 668
- US-A- 3 524 378

## Description

L'invention a trait à un organe de fixation d'un accessoire sur un support ainsi que du support sur une structure.

Par la suite, l'invention est décrite en référence à un support en forme de plaque, en particulier une tôle.

Une tôle est généralement métallique ou, en variante, en polymère ou en un matériau composite. Les tôles sont généralement rectangulaires et pourvues de nervures ouvertes, longitudinales, parallèles. Ces nervures sont ménagées sur au moins deux bords de la tôle permettant ainsi, par recouvrement partiel, d'assurer l'étanchéité de plusieurs tôles assemblées pour recouvrir une structure.

Par structure on désigne une paroi, située en intérieur ou en extérieur, que cette paroi soit verticale, horizontale ou inclinée. Il s'agit par exemple d'un mur de séparation, d'un mur porteur ou d'un mur de maintien d'un talus. Par structure on désigne également le toit d'un bâtiment.

La fixation des tôles sur une structure doit respecter la règlementation en vigueur concernant l'étanchéité à l'air et à l'eau. Pour cela, on connaît, par exemple par US-A-3 524 378, des vis de fixation pourvues d'une rondelle, dite rondelle d'appui et d'étanchéité, comprenant un élément rigide le plus souvent métallique et un élément souple, type joint en élastomère, fixé sur une face destinée à être en appui sur la tôle, autour de l'orifice de passage de la vis. Cette rondelle est mobile en translation le long de la vis. L'appui de la rondelle sur la tôle est réalisé par la tête de la vis de fixation, le plus souvent hexagonale, cylindrique ou toute forme permettant un entrainement par un outil de vissage. Une fois la vis en place, il n'est pas possible de fixer un accessoire sur la tête. La fixation d'un accessoire sur la tôle implique donc la mise en place d'une autre vis, ce qui induit un perçage de la tôle, nuisible à l'étanchéité de la fixation de cette dernière sur la structure. De plus, on altère également la résistance et l'intégrité structurelle de la tôle.

On connait par EP-A-1 467 110 une vis dont la tête est filetée et adaptée pour recevoir un écrou. Il est ainsi possible de maintenir un accessoire sur la tôle en le serrant contre cette dernière à l'aide de l'écrou. L'écrou assure ici le maintien de la tôle et de l'accessoire sur la structure. En revanche, il n'est pas possible de changer l'accessoire sans altérer la fixation de la tôle sur la structure, en l'espèce, une fois la vis ôtée pour changer l'accessoire, la fixation de la tôle sur la structure est libre et n'est plus étanche.

Par ailleurs, DE-U-20 2011 004144, sur lequel est basé le préambule de la revendication 1, propose de souder, sur la tête d'une vis de fixation sur une structure, une tige filetée autour de laquelle sont vissés des écrous de serrage d'un panneau solaire. En pratique, deux écrous sont nécessaires pour « prendre en sandwich » le panneau entre eux et éviter toute interférence avec la zone de soudure entre la tête de la vis et la tige filetée.

Le document DE 202 08 960 U1 montre un autre organe de fixation selon le préambule de la revendication 1.

Le but de la présente invention est de proposer un organe de fixation alternatif, permettant d'assurer la fixation, étanche, d'un support, en particulier une tôle, sur une structure, tout en autorisant le montage d'un accessoire sur le support sans compromettre l'étanchéité de la fixation du support sur la structure ou l'intégrité structurelle du support.

A cet effet l'invention a pour objet un organe de fixation d'un accessoire sur un support ainsi que du support sur une structure, tel que défini à la revendication 1.

On obtient ainsi deux types de fixation à l'aide d'un même organe, à savoir une fixation étanche, généralement définitive, du support sur une structure et une fixation amovible d'un accessoire sur le support, tout en facilitant la mise en place de cet accessoire, par guidage de l'accessoire dans la gorge lors de l'appui de l'accessoire sur la collerette.

Des aspects avantageux mais non obligatoires de l'invention sont spécifiés aux revendications dépendantes.

L'invention sera mieux comprise et d'autres avantages de celle-ci apparaîtront plus clairement à la lecture de la description qui va suivre de plusieurs modes de réalisation d'un organe de fixation conforme à l'invention, donnée uniquement à titre d'exemple et faite en se référant aux dessins annexés dans lesquels:
- la figure 1 est une vue de côté d'un organe de fixation conforme à un premier mode de réalisation, l'organe de serrage n'étant pas représenté,
- la figure 2 est une vue en perspective, à la même échelle, de l'organe de fixation de la figure 1, un organe de serrage et un moyen d'étanchéité supplémentaire étant illustrés en position de pré montage,
- la figure 3 est une vue en perspective, à la même échelle et sous un autre angle similaire à la figure 2,
- la figure 4 est une vue de côté, similaire à la figure 1 et à la même échelle, d'un organe de fixation conforme à un autre mode de réalisation de l'invention,
- la figure 5 est une vue en perspective, similaire à la figure 2 et à plus grande échelle, de l'organe de la figure 4 et
- les figures 6 à 8 sont des vues en perspectives, partielles, illustrant les étapes de mise en place d'un accessoire sur un support à l'aide de l'organe de fixation de la figure 1, la structure recevant le support n'étant pas illustrée pour plus de lisibilité.

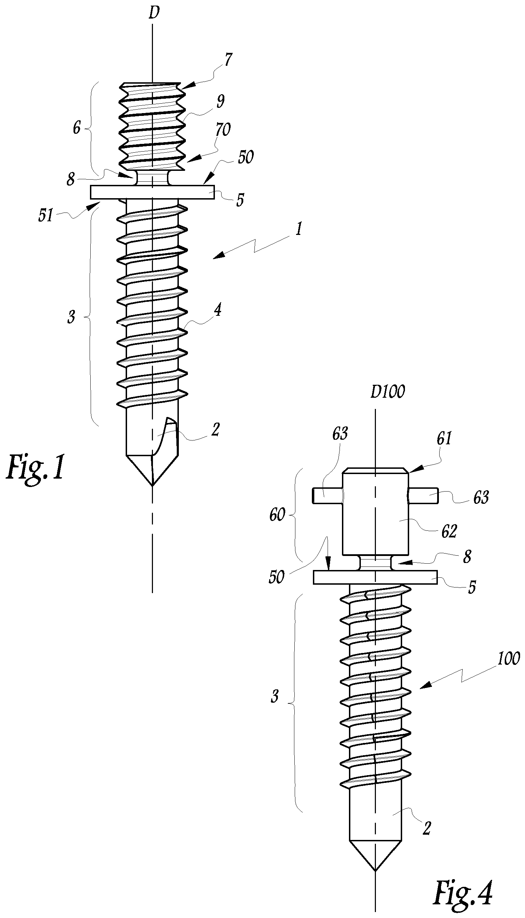

La figure 1 illustre un premier mode de réalisation de l'organe de fixation, en l'espèce une tige filetée 1, avantageusement métallique. Dans l'exemple la tige filetée 1 est pourvue d'une pointe auto-perceuse 2. En variante, la pointe n'est pas auto-perceuse. Une première partie 3, cylindrique à base circulaire, de la tige filetée 1 permet la fixation d'un support sur une structure.

Cette première partie 3 comprend un premier filetage 4 qui s'étend à partir de la pointe 2 sur une partie de la longueur de la tige 1.

L'extrémité de la première partie 3, opposée à la pointe 2, est matérialisée par un moyen d'appui étanche 5. Ce moyen est formé par une collerette 5 en forme de bague aplatie entourant la partie 3. Cette collerette 5 est immobile en translation selon une direction parallèle à un axe longitudinal D de la partie 3. Avantageusement, la collerette 5 est également immobile en rotation autour de l'axe D. La collerette 5 est rendue solidaire de la tige par des techniques connues, par exemple par moulage, collage ou soudage. En variante la collerette 5 est monobloc avec la partie 3.

Une seconde partie 6 de manoeuvre de la tige 1 s'étend à partir de la collerette 5 en direction de l'extrémité libre 7 de la tige 1 opposée à la pointe 2. Cette seconde partie 6, dénommée par la suite « tête », est cylindrique à base circulaire, et, ici, de même diamètre que la partie 3. En variante, la tête 6 a un diamètre différent de celui de la partie 3.

La tête 6 est pourvue d'un filetage 9. Dans l'exemple, le pas du filetage 9 est différent de celui du filetage 4 de la première partie 3. En variante il est identique. Dans un autre mode de réalisation, le filetage 9 est réalisé sur une partie seulement de la tête 6.

L'extrémité 70 de la tête 6 opposée à l'extrémité 7, donc celle située à proximité de la collerette 5, comprend une gorge radiale 8, ménagée sur la périphérie de la tête 6. Cette gorge 8 est mitoyenne d'une face 50 de la collerette 5. La face 50 est orientée vers l'extrémité 7 de la tête 6, c'est à dire vers le haut en regardant la figure 1. La gorge 8 forme un espace de réception et de maintien d'un accessoire. Celui-ci est ainsi guidé et positionné lors de son appui sur la face 50 de la collerette 5.

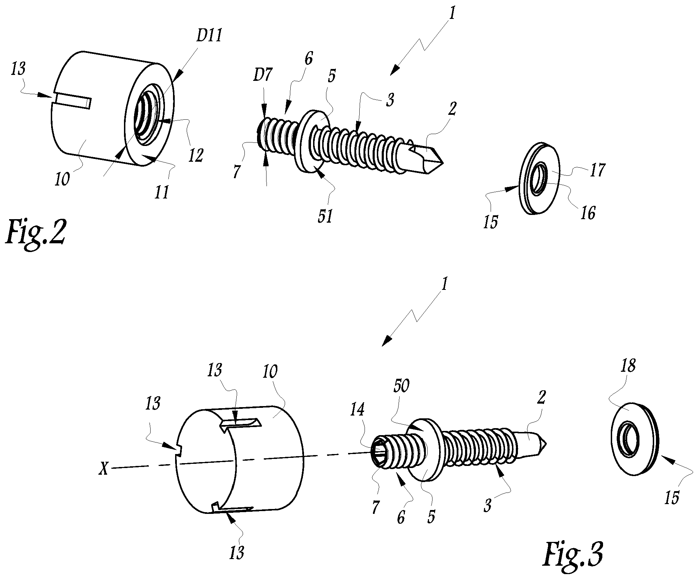

Comme illustré à la figure 2, un écrou borgne 10, configuré en cylindre à base circulaire, est équipé sur une face 11, globalement plane, d'un orifice central 12 taraudé. Le taraudage de l'orifice 12 correspond au filetage 9 de la tête 6. La face 11 est destinée à être en regard de la face 50 de la collerette 5 lorsque l'écrou 10 est monté sur la tête. La face 11 est circulaire et d'un diamètre externe D11 supérieure au diamètre externe D7 de l'extrémité 7.

Comme cela apparaît plus clairement à la figure 3, la manoeuvre de l'écrou 10 est réalisée par trois rainures longitudinales 13, disposées en triangle et orientées parallèlement à un axe longitudinal X de l'écrou 10. Ces trois rainures 13 forment une empreinte permettant, par l'insertion d'un outil à trois dents non illustré, d'effectuer une manoeuvre de vissage ou de dévissage de l'écrou 10 sur la tête 6 de la tige 1. Les rainures 13 permettent d'éviter le dévissage de l'écrou 10 par une personne non autorisée, un tel outil étant réalisé spécifiquement.

Dans d'autres modes de réalisation non représentés, l'empreinte permettant la manoeuvre de l'écrou 10 est différente.

A la figure 3, une empreinte 14, formée par un trou hexagonal, est ménagée sur l'extrémité libre 7 de la tête 6. Cette empreinte 14 permet l'insertion d'un outil de manoeuvre connu, par exemple une clé à six pans, pour manoeuvrer la tige 1, lorsque l'écrou 10 n'est pas en place sur la tête 6. En d'autres termes, avant de mettre en place l'écrou 10, on assure la manoeuvre de la tige 1 de manière connue, par un vissage ou dévissage avec un outil connu. En variante, l'empreinte est d'une autre forme, par exemple cruciforme, en étoile ou autre.

Une rondelle d'étanchéité 15 est également illustrée, en position de pré montage, aux figures 2 et 3. Cette rondelle 15 forme avantageusement un moyen supplémentaire d'étanchéité, en complément de la collerette 5. Selon les besoins, la fixation du support sur la structure est réalisée avec ou sans rondelle 15. La rondelle 15 est en forme de bague aplatie, métallique, pourvue d'un orifice circulaire central 16 permettant, à jeu minimal, l'insertion de la partie filetée 3 de la tige 1, à partir de la pointe 12, dans l'orifice 16. Cette rondelle 15 est pourvue sur une face destinée à être en appui sur la tôle d'un joint d'étanchéité annulaire 17 réalisé en un matériau souple, par exemple en élastomère. On peut ainsi, si besoin, monter la rondelle d'étanchéité 15 sur la tige 1 de sorte que sa face 18, opposée à celle munie du joint 17, soit en appui contre la face 51, opposée à la face 50, de la collerette fixe 5. Cette dernière, lors du vissage de la tige 1 dans la structure, appuie sur la rondelle 15 et optimise l'étanchéité de la fixation.

En variante non représentée, la face 51 de la collerette 5 est pourvue d'un joint d'étanchéité.

La figure 4 illustre un autre mode de réalisation de l'organe de fixation, à savoir une tige filetée 100 similaire à la tige 1. Pour faciliter la lisibilité, les caractéristiques communes et identiques aux deux modes de réalisation portent les mêmes références.

La pointe 2, la partie filetée 3 et la collerette 5 sont identiques à celles de la tige filetée 1. La tête 60 est également pourvue d'une gorge 8 annulaire, au niveau de la face 50 de la collerette 5.

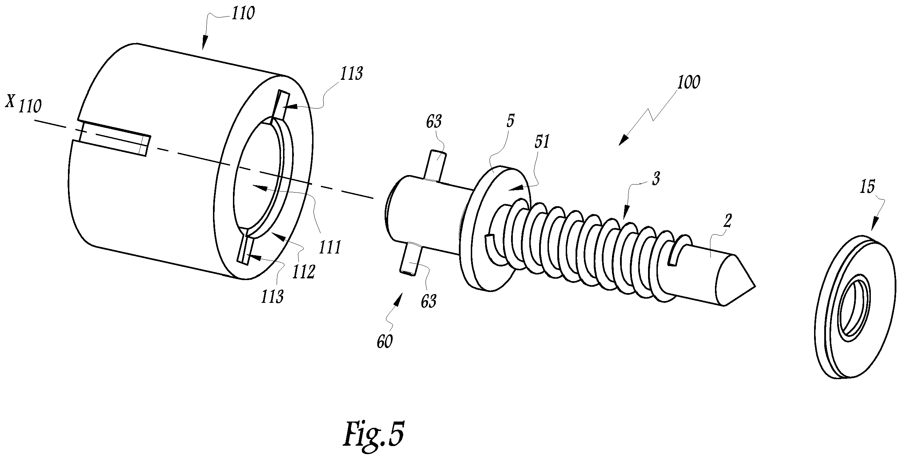

La tête 60 est globalement cylindrique à base circulaire mais elle est dépourvue d'un filetage. La tête 60, entre la gorge 8 et son extrémité libre 61, présente une paroi externe 62 lisse. La tête 60 comprend, au voisinage de l'extrémité 61, deux ergots 63, identiques, s'étendant radialement vers l'extérieur à partir de la paroi 62. Ces ergots 63, perpendiculaires à un axe longitudinal D100 de la tige 100, permettent la fixation d'un écrou 110, illustré à la figure 5.

L'écrou 110 est de forme cylindrique à base circulaire. Ses dimensions sont similaires à celles de l'écrou 10. Il est pourvu d'un trou borgne 111 sur une face 112. Ce trou 111 est circulaire avec deux rainures 113. Les rainures 113 sont diamétralement opposées et perpendiculaires à un axe longitudinal X110 de l'écrou 110. Le trou 111 est ainsi adapté pour recevoir l'extrémité libre 61 et les ergots 63 de la tête 60. En d'autres termes, le maintien ou la séparation de l'écrou 110 de la tige 100 s'effectue par un mouvement de quart de tour. La manoeuvre de l'écrou 110 est effectuée à l'aide d'un outil adapté pour être en prise avec les rainures 13, de façon similaire à la manoeuvre de l'écrou 10.

L'extrémité libre 61 de la tête 60 est également pourvue, comme précédemment, d'une empreinte, non visible, adaptée pour recevoir un outil assurant la manoeuvre de la tige filetée 100. Ce peut être une empreinte hexagonale, cruciforme ou autre.

Une rondelle d'étanchéité 15 est également prévue pour équiper la tige 100.

Dans d'autres modes de réalisation non illustrés, la tête de la tige filetée est pourvue d'un taraudage, celui-ci permettant non seulement la manoeuvre de la tige, par insertion d'une vis ou d'un outil fileté, pour assurer la fixation étanche de la tôle sur la structure mais également la mise en place d'une vis, Dans d'autres modes de réalisation, on assure le maintien de l'écrou sur la tête de la tige par clipsage.

Le type de liaison entre l'écrou et la tête est adapté en fonction du maintien recherché. En d'autres termes, si l'écrou est utilisé comme un capot protecteur ou décoratif de la tête de la tige, une liaison sans effort de serrage est adaptée. En revanche, s'il est nécessaire de maintenir fermement un accessoire entre la face 50 de la collerette et l'écrou, c'est-à-dire de fixer un accessoire sur le support, une solution assurant un serrage fort, par exemple un pas de vis, est préférée.

Avec un tel organe de fixation 1 ou 100, il est possible, sans intervenir sur la liaison entre le support et la structure, de fixer un accessoire sur le support par l'intermédiaire de la tête 6 ou 60. Pour cela, l'accessoire est équipé d'un organe de maintien propre à recevoir la tête 6 ou 60. Le blocage en position de l'accessoire est réalisé par serrage de cet organe de maintien entre la face 50 de la collerette 5 et la face 11 ou 112 de l'écrou 10 ou 110.

Dans d'autres modes de réalisation, l'accessoire est lui-même pourvu d'une face taraudée ou pourvue d'une empreinte , similaire à la face 11 ou 112 et adaptée pour être fixé sur la tête 6 ou 60 de la tige1 ou 100. Dans ce cas, l'écrou 10 ou 110 n'est plus nécessaire.

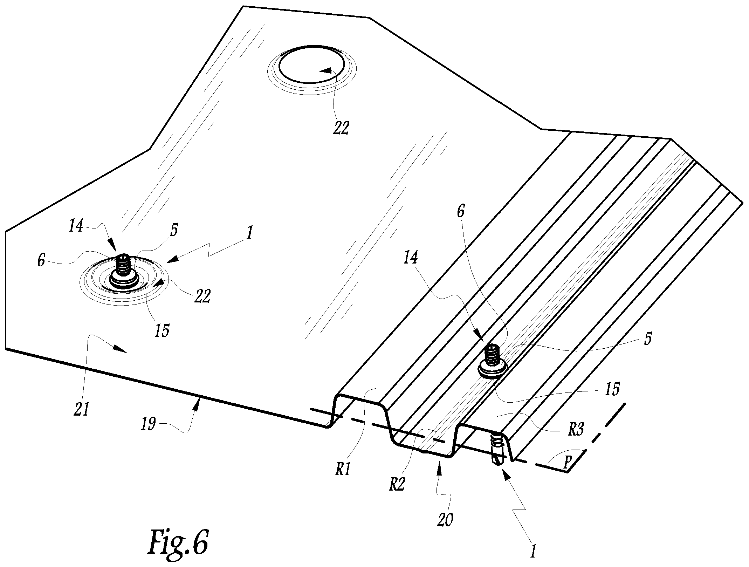

Les figures 6 à 8 illustrent la mise en place d'un accessoire pourvu d'un organe de maintien sur une tôle à l'aide de l'organe de fixation de la figure 1, étant entendu que la mise en place est similaire avec un autre type d'organe de fixation et/ou d'accessoire.

La figure 6 est une vue partielle d'un support, en l'espèce une tôle 19 avec une nervure 20 constitutive d'un bord longitudinal de la tôle 19. Cette nervure 20 est en forme de double S, deux parties en relief R1 et R3 étant au dessus d'un plan moyen P de la tôle 19, de part et d'autre d'une partie en relief R2 à fond plat.

Deux tiges filetées 1 maintenant la tôle 19 sur une structure, non illustrée, sont représentées. Une des tiges 1 est située sur le corps principal 21, plan, de la tôle 19 dans une cuvette 22 préformée. Cette cuvette 22 forme un moyen de repérage pour le perçage de la tôle 18, soit par une perceuse, sur site, soit, comme ici par la pointe 2 auto perforante de la tige 1. La fixation étanche de la tôle 19 sur la structure est assurée par la collerette 5 en appui sur la rondelle d'étanchéité 15, celle ci étant elle-même en appui contre la tôle 1 autour de l'orifice de perçage.

Ici l'empreinte hexagonale 14 de la tête 6 permet de visser la tige 1 avec une clé six pans pour fixer la tôle 19 sur la structure.

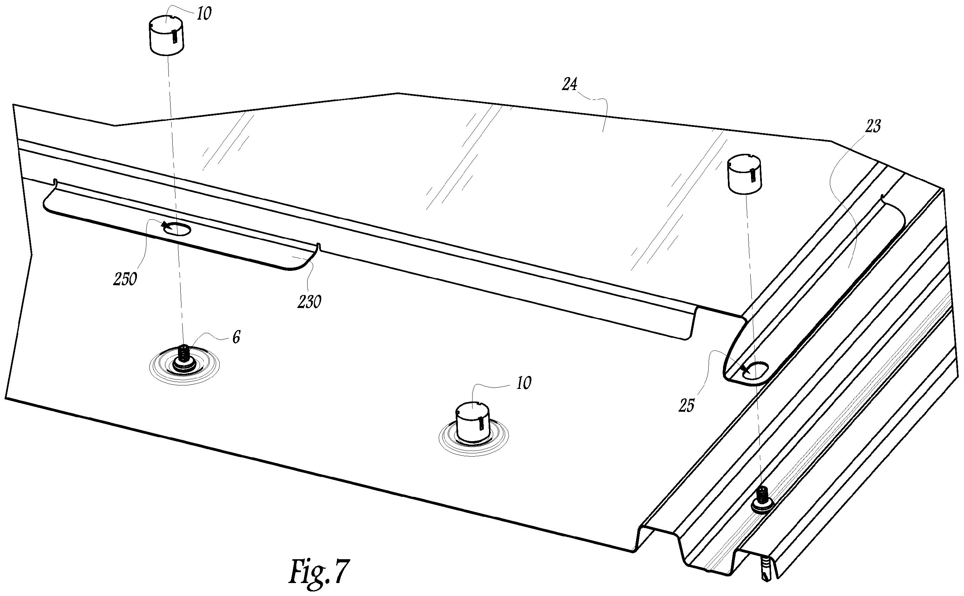

Dans cette configuration, la tôle 19 est dépourvue d'accessoire et la tête 6 de chaque tige 1 peut recevoir un écrou 10 formant un capot de protection, comme illustré sur une tige 1 à la figure 7. Afin d'améliorer l'aspect visuel de l'écrou 10, ce denier peut être peint, imprimé, gravé ou d'une forme complexe.

La figure 7 représente également deux écrous 10, en position de pré montage sur une tête 6, pour maintenir chacun une patte de fixation 23, 230 d'un accessoire 24, en forme de plaque. Chaque patte 23, 230 forme un organe de maintien de l'accessoire 23. Un orifice 25, 250 ménagé dans chaque patte 23, 230 permet le passage de la tête 6.

La plaque 24 se positionne, par ses pattes 23 et 230, au-dessus des têtes 6 qui s'insèrent aisément dans les orifices 25, 250. Les bords des orifices 25, 250 s'insèrent dans la gorge 8 de chaque tête 6, ce qui participe au maintien et au guidage de la plaque 24 sur la tôle 19, les dimensions de la gorge 8 étant adaptées à l'épaisseur de la plaque 24 au niveau des bords des orifices 25, 250.

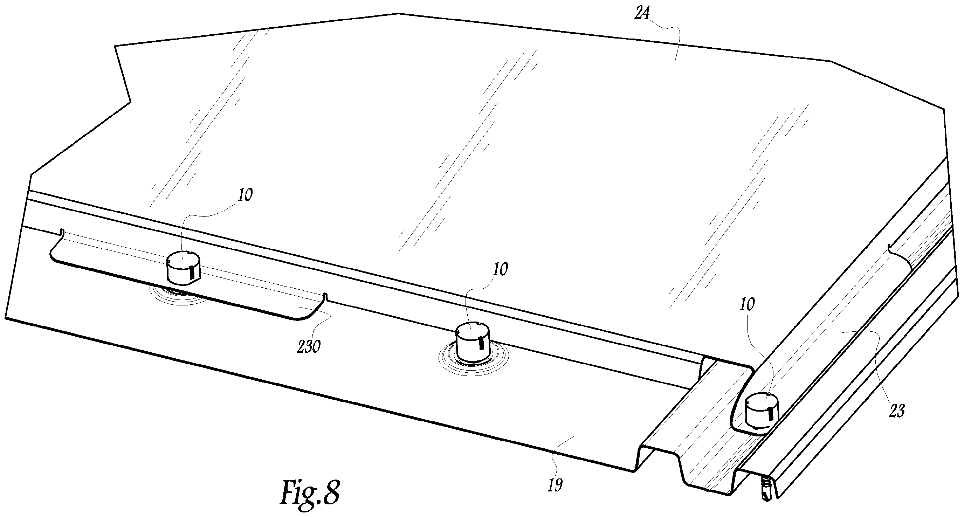

Comme illustré à la figure 8, les dimensions de l'écrou 10, ou pour le moins le diamètre D11 de sa base 11 destinée à être en contact avec la face 50 de la collerette 5, est de dimensions supérieures à celui de l'orifice 25, 250 des pattes 23 et 230, donc au diamètre externe D7 de l'extrémité libre 7 de la tête 6 de la tige 1. Ainsi, l'écrou 10 maintient en appui la patte 23 ou 230 contre la tôle 19, par serrage. L'accessoire 24 est maintenu sur la tête 6 de la tige 1 sans que cela modifie la fixation de la tôle 19 sur la structure par la partie 3 de la tige 1. Avantageusement, la face 11 est pourvue d'une denture, non représentée sur les figures, qui coopère par contact frottant avec la collerette 5 ou avec la plaque 24 à des fins d'anti-dévissage intempestif de l'écrou 10.

Dans d'autres modes de réalisation non illustrés, l'écrou est lui-même équipé d'un moyen de fixation d'un accessoire. Par exemple, l'extrémité libre de l'écrou est pourvue d'un taraudage permettant la fixation d'une tige filetée appartenant à un autre accessoire.

## Revendications

1. Organe de fixation (1 ; 100) d'un accessoire (24) sur un support (19) ainsi que du support (19) sur une structure, l'organe comprenant une première partie (3) filetée et adaptée pour assurer la fixation du support (19) sur la structure, un moyen (5, 15) d'étanchéité de la fixation du support sur la structure, et une seconde partie (6 ; 60) propre à manoeuvrer la première partie (3) tout en bloquant le moyen d'étanchéité en appui sur le support, lequel moyen d'étanchéité comprend une collerette d'appui (5) en forme de bague aplatie, qui est immobile au moins en translation selon une direction parallèle à un axe longitudinal (D) de la première partie (3), qui est adaptée pour maintenir l'accessoire (24) par serrage entre un organe de serrage (10 ; 110) et la seconde partie (6 ; 60), qui est positionnée à une extrémité de la première partie (3), qui matérialise la séparation entre la première partie (3) et la seconde partie (6 ; 60), et à partir d'une face (50) de laquelle la seconde partie (6 ; 60) s'étend en direction d'une extrémité libre (7) de l'organe (1 ; 100),
**caractérisé en ce qu'**une gorge radiale (8) de réception et de maintien de l'accessoire (24) est ménagée à une extrémité (70) de la seconde partie (6 ; 60), cette gorge étant mitoyenne de ladite face (50) de la collerette d'appui (5).

2. Organe selon la revendication 1, **caractérisé en ce que** l'organe est configuré en une tige filetée (1 ; 100).

3. Organe selon l'une quelconque des revendications précédentes, **caractérisé en ce que** la collerette d'appui (5) est également immobile en rotation autour de l'axe longitudinal (D) de la première partie (3).

4. Organe selon la revendication 3, **caractérisé en ce que** la collerette d'appui (5) est solidaire de la première partie (3).

5. Organe selon l'une des revendications précédentes, **caractérisé en ce que** la seconde partie (6) est filetée.

6. organe selon l'une des revendications 1 à 4, **caractérisé en ce que** la seconde partie (60) a une paroi externe (62) lisse et est pourvue de deux ergots (63) s'étendant radialement au voisinage de l'extrémité libre (61) de la seconde partie (60).

7. Organe selon l'une des revendications précédentes, **caractérisé en ce que** l'organe de serrage est un écrou (10 ; 110) dont une face (11 ; 112) est pourvue d'un orifice (12 ; 111) adapté pour recevoir la seconde partie (6 ; 60).

8. Organe selon la revendication 7, **caractérisé en ce que** le diamètre externe (D11) de la face (11 ; 112) de l'écrou (10 ; 110) est supérieur au diamètre externe (D7) de la seconde partie (6 ; 60) afin de maintenir une partie de fixation (23 ; 230) de l'accessoire (24) en appui contre ladite face (50) de la collerette d'appui (5).

9. Organe selon l'une des revendications 7 ou 8, **caractérisé en ce que** l'écrou (10 ; 110) est borgne.

10. Organe selon une des revendications précédentes, **caractérisé en ce que** le moyen d'étanchéité comprend en outre une rondelle (15) dont une face (18) est munie d'un joint d'étanchéité (17).

## Patentansprüche

1. Element (1; 100) zum Befestigen eines Zubehörs (24) an einen Träger (19), sowie des Trägers (19) an einer Struktur, wobei das Element ein erstes Gewindeteil (3), das zur Sicherstellung der Befestigung des Trägers (19) an der Struktur ausgebildet ist, ein Mittel (5, 15) zum Abdichten der Befestigung des Trägers an der Struktur, und ein zweites Teil (6; 60), das geeignet ist, das erste Teil (3) zu betätigen, wobei das Mittel zum Abdichten in Anlage auf dem Träger festgelegt wird, umfasst, wobei das Mittel zum Abdichten einen Anlageflansch (5) in Form eines abgeflachten Rings umfasst, der mindestens translatorisch gemäß einer Richtung parallel zur Längsachse (D) des ersten Teils (3) stationär ist, der ausgebildet ist, das Zubehör (24) durch Klemmung zwischen einem Klemmelement (10; 110) und dem zweiten Teil (6; 60) zu halten, der an einem Ende des ersten Teils (3) positioniert ist, der die Trennung zwischen dem ersten Teil (3) und dem zweiten Teil (6; 60) verwirklicht, und von dessen einer Fläche (50) sich das zweite Teil (6; 60) in Richtung eines freien Endes (7) des Elements (1; 100) erstreckt, **dadurch gekennzeichnet, dass** eine radiale Nut (8) zur Aufnahme und zum Halten des Zubehörs (24) an einem Ende (70) des zweiten Teils (6; 60) eingearbeitet ist, wobei diese Nut angrenzend an die Fläche (50) des Anlageflansches (5) liegt.

2. Element nach Anspruch 1, **dadurch gekennzeichnet, dass** das Element als ein Gewindestab (1; 100) konfiguriert ist.

3. Element nach einem beliebigen der vorhergehenden Ansprüche, **dadurch gekennzeichnet, dass** der Anlageflansch (5) hinsichtlich der Drehung um die Längsachse (D) des ersten Teils (3) feststehend ist.

4. Element nach Anspruch 3, **dadurch gekennzeichnet, dass** der Anlageflansch (5) mit dem ersten Teil (3) verbunden ist.

5. Element nach einem der vorhergehenden Ansprüche, **dadurch gekennzeichnet, dass** das zweite Teil (6) mit einem Gewinde versehen ist.

6. Element nach einem der Ansprüche 1 bis 4, **dadurch gekennzeichnet, dass** das zweite Teil (60) eine glatte Außenwand (62) aufweist und mit zwei Ansätzen (63) versehen ist, die sich radial in der Nähe des freien Endes (61) des zweiten Teils (60) erstrecken.

7. Element nach einem der vorhergehenden Ansprüche, **dadurch gekennzeichnet, dass** das Klemmelement eine Mutter (10; 110) ist, deren eine Fläche (11; 112) mit einer Öffnung (12; 111) versehen ist, die geeignet ist, das zweite Teil (6; 60) aufzunehmen.

8. Element nach Anspruch 7, **dadurch gekennzeichnet, dass** der Außendurchmesser (D11) der Fläche (11; 112) der Mutter (10; 110) größer ist als der Außendurchmesser (D7) des zweiten Teils (6; 60), um ein Befestigungsteil (23; 230) des Zubehörs (24) in Anlage gegen diese Fläche (50) des Anlageflansches (5) zu halten.

9. Element nach einem der Ansprüche 7 oder 8, **dadurch gekennzeichnet, dass** die Mutter (10; 110) als Hutmutter ausgebildet ist.

10. Element nach einem der vorhergehenden Ansprüche, **dadurch gekennzeichnet, dass** das Mittel zum Abdichten außerdem eine Unterlegscheibe (15) ist, deren eine Seite (18) mit einer Dichtung (17) versehen ist.

## Claims

1. Fixing element (1; 100) for fixing an accessory (24) onto a support (19) and the support (19) onto a structure, the element comprising a first threaded part (3) suitable for fixing the support (19) onto the structure, a means (5; 15) of sealing the fixing of the support onto the structure, and a second part (6; 60) suitable for manoeuvring the first part (3) while locking the sealing means resting on the support, which sealing means comprise a support flange (5) in the form of a flattened ring, which is immobile at least in translation along a direction parallel to a longitudinal axis (D) of the first part (3), which is adapted to hold the accessory (24) by tightening between a tightening element (10; 110) and the second part (6; 60), which is positioned at one end of the first part (3), which forms the separation between the first part (3) and the second part (6; 60), and from one face (50) from which the second part (6; 60) is extended towards a free end (7) of the element (1; 100),
**characterized in that** a radial recess (8) for receiving and holding the accessory (24) is provided at one end (70) of the second part (6; 60), said recess adjoining said face (50) of the support flange (5).

2. Element according to claim 1, **characterized in that** the element consists of a threaded rod (1; 100).

3. Element according to either one of the preceding claims, **characterized in that** the support flange (5) is also rotationally immobile around the longitudinal axis (D) of the first part (3).

4. Element according to claim 3, **characterized in that** the support flange (5) is of one piece with the first part (3).

5. Element according to any one of the preceding claims, **characterized in that** the second part (6) is threaded.

6. Element according to any one of claims 1 to 4, **characterized in that** the second part (60) has a smooth outer wall (62) and is provided with two pins (63) extending radially near the free end (61) of the second part (60).

7. Element according to any one of the preceding claims, **characterized in that** the tightening element is a nut (10; 110) one face (11; 112) of which is provided with an orifice (12; 111) adapted to receive the second part (6; 60).

8. Element according to claim 7, **characterized in that** the outside diameter (D11) of the face (11; 112) of the nut (10; 110) is greater than the outside diameter (D7) of the second part (6; 60) so as to hold a fixing part (23; 230) of the accessory (24) pressed against the face (50) of the support flange (5).

9. Element according to either one of claims 7 or 8, **characterized in that** the nut (10; 110) is a cap nut.

10. Element according to any one of the preceding claims, **characterized in that** the sealing means further comprise a washer (15) one face (18) of which is fitted with a gasket (17).
